# EUROPÄISCHE PATENTSCHRIFT

(11) **EP 2 998 161 B1**
(45) Veröffentlichungstag und Bekanntmachung des Hinweises auf die Patenterteilung: **18.09.2019**
(21) Anmeldenummer: 15179803.0
(22) Anmeldetag: 05.08.2015
(51) Int. Cl.: B60R 7/04, B60R 11/00

(54) **NUTZFAHRZEUGKABINE MIT ZENTRALEM SCHWENKPUNKT**
COMMERCIAL VEHICLE CAB WITH CENTRAL PIVOT POINT
CABINE DE VEHICULE UTILITAIRE DOTEE D'UN POINT DE PIVOTEMENT CENTRAL

(30) Priorität: 19.09.2014 DE 102014113604
(43) Veröffentlichungstag der Anmeldung: 23.03.2016
(73) Patentinhaber: GRAMMER AG, 92224 Amberg (DE)
(72) Erfinder: Meyder, Volkhart, 64658 Fürth / Odenwald (DE); Übelacker, Roland, 92536 Pfreimd (DE); Wittmann, Hubert, 92685 Floß (DE); Strohal, Christian, 31118 Braunschweig (DE)
(74) Vertreter: Hannke, Christian

(56) Entgegenhaltungen:
- EP-A2- 1 367 474
- WO-A2-03/063647
- US-A1- 2005 264 020
- US-A1- 2010 140 425

## Beschreibung

Die Erfindung betrifft eine Fahrerkabine eines Nutzfahrzeugs.

Fahrer von Nutzfahrzeugen wie eines Lastkraftwagens (LKW) müssen häufig aufgrund von vorgeschriebenen Ruhezeiten oder aufgrund eines LKW-Wechsels eine Fahrerkabine eines LKWs mit ihrer Ausrüstung neu ausstatten. Hierfür müssen häufig verschiedene Dokumente und PC-Tablets, Nahrungsmittel und Getränke, gegebenenfalls eine Kaffeemaschine und integrierte Cup-Holders sowie eine Cooling-Box mit gegebenenfalls einem Kühlschrank von dem Fahrer individuell neu in der Fahrerkabine eines LKWs eingerichtet werden. Zudem sind persönliche Ausrüstungen, wie Waschutensilien und Kleider, in der Kabine zu stationieren. Da mittlerweile die Anzahl der anzuordnenden und in der LKW-Kabine zu stationierenden individuellen Gegenstände des Fahrers sehr groß ist, besteht die Notwendigkeit, dies auf einfache und schnelle Weise stattfinden zu lassen. Ansonsten müsste der Fahrer mehrmals zwischen dem stationären Ort, an dem diese Gegenstände aufbewahrt sind, und der LKW-Kabine hin und her laufen. Zudem besteht Bedarf, diese Gegenstände aufgrund der baulich bedingten Höhe der LKW-Kabine auf einfache Weise in das Innere der Kabine trotz ihres Gewichtes bringen zu können.

Außerdem ist die Anordnung dieser Gegenstände in ordentlicher und aufgeräumter Form innerhalb der Kabine gewünscht. Dies ist häufig dadurch nicht realisierbar, dass aufgrund der Anordnung des Fahrersitzes und des Beifahrersitzes wenig Restplatz innerhalb der Kabine vorhanden ist, insbesondere wenn im hinteren Bereich der Kabine noch ein Schlafplatz vorhanden sein soll. Die Beladung der Fahrerkabine findet bisher häufig von der Beifahrersitzseite aus statt, da die Fahrersitzseite zusätzlich mit einem Lenkrad ausgestattet ist, welches hier hindernd wirkt. Jedoch ist auch der Beifahrersitz für das Anordnen der Gegenstände häufig behindernd, da man über diesen Beifahrersitz hinweg die Gegenstände heben muss, um in den Zwischenraum zwischen Fahrersitz und Beifahrersitz mit den Gegenständen zu gelangen.

Die Druckschriften EP1367474 A2 und US2005/0264020 A1 offenbaren eine Fahrerkabine mit den Merkmalen des Oberbegriffes des Anspruchs 1.

Demzufolge ist es Aufgabe der Erfindung, ein Gesamtsystem zu schaffen, welches innerhalb der Fahrerkabine eine geordnete und aufgeräumte Anordnung der verschiedenen Gegenstände des Fahrers und gegebenenfalls des Beifahrers auf einfache Weise während der Zuladung ermöglicht.

Dies wird erfindungsgemäß dadurch gelöst, dass bei der Fahrerkabine des Nutzfahrzeugs sich innerhalb der Fahrerkabine eine an einer Bodenfläche der Fahrerkabine angeordnete erste Drehachse mit einer Funktionsdrehsäule erstreckt, wobei zwischen einer ersten Längsachse der ersten Drehachse und der Ausrichtung der Bodenfläche ein Winkel ausgebildet ist. Dabei bildet die erste Drehachse eine Welle aus, welche gegenüber der Bodenfläche mit mindestens zwei oberhalb und/oder unterhalb der Bodenfläche in mindestens einem Tragelement angeordneten Wälzlagern drehbar gelagert ist, wobei das mindestens eine Tragelement mechanisch starr mit der Bodenfläche verbunden ist. Alternativ ist die erste Drehachse mittels einer Flanschverbindung mechanisch starr mit der Bodenfläche verbunden und die Funktionsdrehsäule mittels Wälzlagern gegenüber der ersten Drehachse gelagert. Erfindungsgemäß ist die Funktionsdrehsäule als Zylinder oder Hohlzylinder ausgebildet und fluchtend mit der ersten Drehachse angeordnet.

Diese erste Drehachse, welche beispielsweise zylindrisch ausgebildet sein kann, stellt einen wesentlichen Punkt der Erfindung dar. Sie ist zentrales Ausgangselement bzw. Drehelement oder auch Drehachse für viele Elemente der Fahrerkabine, wie nachfolgend noch erläutert wird, und kann insbesondere auch als Drehzapfen oder Drehzapfenelement bezeichnet werden.

Die Ausrichtung der Bodenfläche ist dabei bevorzugt horizontal, wenn das Nutzfahrzeug auf ebenem Untergrund steht.

Gemäß einem bevorzugten Ausführungsbeispiel weist der Winkel einen Wert aus einem Bereich von 45° bis 90°, bevorzugt von 90°, auf. Somit ist die erste Drehachse bevorzugt vertikal zur Bodenfläche der Fahrerkabine angeordnet. Dies hat den Vorteil, dass die sich um die Drehachse drehenden Komponenten in jeder Winkelstellung den gleichen Abstand zur Bodenfläche haben können.

Gemäß einer weiteren Ausführungsform ist die erste Drehachse um ihre Längsachse um 360° drehbar angeordnet und kann somit eine vollständige Umdrehung durchführen. Dies gilt ebenfalls für die Funktionsdrehsäule, welche mechanisch fest und/oder starr mit der Drehachse verbunden werden kann und somit von jedem Ort der Fahrerkabine einsehbar bzw. bedienbar ist. Weiterhin ist es denkbar, dass die Funktionsdrehsäule um die erste Drehachse um 360° drehbar angeordnet ist, wenn die erste Drehachse mechanisch starr mit der Bodenfläche verbunden ist.

Dabei ist es erfindungsgemäß vorgesehen, dass die Funktionsdrehsäule als Zylinder oder als Hohlzylinder ausgebildet ist. Ferner ist die Funktionsdrehsäule fluchtend mit der Drehachse angeordnet. Ist die Funktionsdrehsäule dabei als Zylinder bzw. Vollzylinder ausgebildet, kann ein unteres Ende des Zylinders an einem oberen Ende der Drehachse angeordnet bzw. mit diesem verbunden werden, so dass bevorzugt die Längsachse der Funktionsdrehsäule mit der ersten Längsachse fluchtet. Ist die Funktionsdrehsäule als Hohlzylinder ausgebildet, kann sie über die Drehachse gestülpt werden, so dass bevorzugt die Längsachse der Funktionsdrehsäule mit der ersten Längsachse fluchtet und gleichzeitig in radialer Richtung die Funktionsdrehsäule zumindest abschnittsweise zur Drehachse benachbart und/oder beabstandet angeordnet ist.

Der Hohlzylinder kann dabei zumindest an seinem oberen Ende eine Stirnabdeckung aufweisen, mittels der die Funktionsdrehsäule mit der Drehachse befestigt wird. Diese Stirnabdeckung kann gemäß einem weiteren Ausführungsbeispiel drehbar zum Rest des Hohlzylinders (beispielsweise mittels eines Gleitlagers) und fest mit der Drehachse oder starr zum Rest des Hohlzylinders und drehbar zur Drehachse angeordnet sein.

In der Praxis hat es sich dabei als vorteilhaft herausgestellt, wenn die Drehachse bzw. die Funktionsdrehsäule zwischen einem Fahrersitz und einem Beifahrersitz der Fahrerkabine angeordnet ist bzw. sind, da dies die beiden Plätze in der Kabine sind, an denen Insassen des Nutzfahrzeugs sich am häufigsten aufhalten. Somit kann auch während der Fahrt auf die Funktionsdrehsäule zugegriffen werden.

Um von verschiedenen Höhen aus auf die Funktionsdrehsäule zugreifen zu können, ist es gemäß einem weiteren Ausführungsbeispiel vorteilhaft, wenn die Funktionsdrehsäule eine Teleskopvorrichtung zum stufenlosen teleskopartigen Ausfahren der Funktionsdrehsäule entlang der ersten Längsachse von einem Grundzustand bis zu einem ausgefahrenen Zustand aufweist. Dabei ist es vorteilhat, wenn eine Länge der Funktionsdrehsäule im ausgefahrenen Zustand einen Wert aufweist, der maximal einem Abstand zwischen der Bodenfläche der Fahrerkabine bis zu einer gegenüberliegenden Deckenfläche der Fahrerkabine entspricht und/oder wenn ein oberer Endabschnitt der Funktionsdrehsäule an der Deckenfläche befestigbar ist.

Damit kann die Funktionsdrehsäule nicht nur an der Bodenfläche mittels der Drehachse, sondern gleichzeitig auch an der Deckenfläche befestigt werden, wodurch die mechanische Festigkeit der Anordnung erhöht wird. Dies kann gerade bei schwierigen Straßenverhältnissen und ausgeprägten Schwingungen des Nutzfahrzeugs bzw. dessen Kabine günstig sein. Die Befestigung des oberen Endabschnitts der Funktionsdrehsäule an der Deckenfläche erfolgt dabei bevorzugt so, dass die Funktionsdrehsäule weiterhin drehbar bezüglich der Boden- bzw. Deckenfläche bleibt.

Es bildet gemäß einer ersten Alternative die erste Drehachse eine Welle aus, welche gegenüber der Bodenfläche mit mindestens zwei oberhalb und/ oder unterhalb der Bodenfläche in mindestens einem Tragelement angeordneten Wälzlagern drehbar gelagert ist, wobei das Tragelement mechanisch starr mit der Bodenfläche verbunden ist. Gemäß einer zweiten Alternative ist die Drehachse mittels einer Flanschverbindung mechanisch starr mit der Bodenfläche verbunden und die Funktionsdrehsäule mittels Wälzlagern gegenüber der Drehachse gelagert.

Die Anbindung der Funktionsdrehsäule an die Deckenfläche kann dabei analog oder unterschiedlich ausgebildet sein wie die Anbindung der Drehachse an die Bodenfläche.

Die Funktionsdrehsäule kann dabei unterschiedliche Aufgaben erfüllen. So ist denkbar, dass die Funktionsdrehsäule mindestens ein Anzeigeelement zum Anzeigen von Informationen für einen Fahrer und/ oder Beifahrer aufweist. Dieses Anzeigeelement kann ein elektronisches Display oder ein analoges Anzeigeelement wie ein Thermometer oder ein Barometer sein. Damit können unter anderem Informationen wie Routenplanung und aktuelle Verkehrsinfos wie Staumeldungen, aber auch aktuelle Werte von Druck- oder Temperatursensoren im Inneren des Motors angezeigt werden.

Weiterhin ist es denkbar, dass mittels der Drehachse und/oder Funktionsdrehsäule weitere Elemente innerhalb der Fahrerkabine verschwenkt bzw. angeordnet werden. So ist es gemäß einem weiteren Ausführungsbeispiel vorteilhaft, wenn an der Funktionsdrehsäule mindestens ein erster Schwenkarm mit einem ersten Endabschnitt um die erste Längsachse schwenkbar gelagert ist, wobei eine Längserstreckungsrichtung des ersten Schwenkarms senkrecht zur ersten Längsachse angeordnet ist. Der erste Schwenkarm kann also beispielsweise mechanisch fest und/oder starr mit der Funktionsdrehsäule verbunden werden, so dass er je nach oben erläuterter mechanischer Verbindung sich mit der Funktionsdrehsäule und der Drehachse um deren Längsachse dreht oder mit der Funktionsdrehsäule um die Drehachse dreht.

Um weitere Aufgaben innerhalb der Fahrerkabine zu erfüllen, ist es gemäß einem weiteren bevorzugten Ausführungsbeispiel vorteilhaft, wenn an einem zweiten Endabschnitt des ersten Schwenkarms stangenartige Elemente zueinander parallel und senkrecht zum ersten Schwenkarm angeordnet sind, wobei mindestens eines der stangenartigen Elemente um eine am zweiten Endabschnitt des ersten Schwenkarms angeordnete zweite Drehachse verschwenkbar anordenbar ist, wobei die zweite Drehachse parallel zu einer Längserstreckungsrichtung der stangenartigen Elemente angeordnet ist. An diesen stangenartigen Elementen können wie nachfolgend beschrieben weitere Elemente angebunden und mit diesen verschwenkt werden.

Dabei kann bevorzugt das erste stangenartige Element zum Schwenkarm mechanisch starr angeordnet sein, so dass das zweite stangenartige Element um das erste stangenartige Element drehbar angeordnet ist. Denkbar ist aber auch, dass das erste stangenartige Element zum zweiten stangenartigen Element mechanisch starr angeordnet ist, so dass beide stangenartigen Elemente um die zweite Drehachse drehbar angeordnet sind. Die zweite Drehachse kann dabei gleich oder unterschiedlich zur ersten Drehachse ausgebildet sein.

Auf der Seite der stangenartigen Elemente können weitere nützliche Komponenten vorhanden sein. So ist es vorteilhaft, wenn ein Aufbewahrungsbehälter mit einem ersten und/oder einem zweiten der stangenartigen Elemente mechanisch fest verbunden anordenbar ist. Somit ist einerseits eine Fixierung und durch eine Drehung der stangenartigen Elemente um die zweite Drehachse oder durch eine Verschwenkung der stangenartigen Elemente mit dem ersten Schwenkarm auch eine gezielte Positionsänderung des Aufbewahrungsbehälters möglich. Denkbar ist eine Verbindung aus Führungsschiene und Gleitschiene, wobei die Führungsschiene beispielsweise einen rechteckigen Querschnitt und die Gleitschiene einen C-förmigen Querschnitt aufweist, mittels welchem der rechteckige Querschnitt umgreifbar ist.

Der Aufbewahrungsbehälter kann aber auch direkt an der Drehachse und/ oder der Funktionsdrehsäule angeordnet sein. Dafür kann der Aufbewahrungsbehälter beispielsweise eine Aussparung an seiner Bodenfläche aufweisen, die zur Form der Drehachse bzw. Funktionsdrehsäule komplementär ausgebildet ist, beispielsweise zu einer kreisförmigen Drehachse eine zylindrische Aussparung. Allgemein ist es vorteilhaft, wenn die Funktionsdrehsäule von der Drehachse abnehmbar und/ oder der ansonsten kreisförmige Querschnitt der Drehachse an zumindest einer Stelle mit einer Abflachung versehen ist. So kann beispielsweise eine radiale Positionssicherung des Aufbewahrungsbehälters gegenüber der Drehachse erzielt werden, wenn dessen Aussparung ebenfalls mit einer komplementär gestalteten Abflachung ausgebildet ist.

Die beschriebenen Befestigungsarten gelten sinngemäß auch für alle anderen Komponenten, die mit der Drehachse verbindbar sind, somit insbesondere für die Schwenkarme und die Funktionsdrehsäule.

Um eine möglichst einfache Drehbewegung des Aufbewahrungsbehälters zu realisieren, ist es weiterhin vorteilhaft, wenn das erste stangenartige Element und/oder das zweite stangenartige Element fluchtend zur zweiten Drehachse anordenbar ist.

Eine einfache Verbindung zwischen beiden stangenartigen Elementen ist beispielsweise dadurch gewährleistet, wenn das zweite stangenartige Element beabstandet zum ersten stangenartigen Element angeordnet ist und mit diesem mittels eines Verbindungselements verbindbar ist, wobei das Verbindungselement jeweils an einem ersten oberen Endabschnitt der stangenartigen Elemente anordenbar ist. Beispielsweise kann das Verbindungselement plattenähnlich ausgestaltet sein. Weiterhin kann das Verbindungselement entweder wie oben beschrieben starr mit beiden Elementen oder nur mit dem zweiten starr und mit dem ersten schwenkbar verbunden sein. Es ist dabei vorteilhaft, wenn die oberen Endabschnitte der stangenartigen Elemente innerhalb der Fahrerkabine auf gleicher Höhe angeordnet sind.

Weiterhin ist es vorteilhaft, wenn an der Funktionsdrehsäule ein zweiter Schwenkarm mit einem ersten Endabschnitt um die erste Längsachse schwenkbar gelagert ist, wobei eine Längserstreckungsrichtung des zweiten Schwenkarms senkrecht zur ersten Längsachse angeordnet ist. Dieser zweite Schwenkarm kann auf gleicher Höhe wie der erste Schwenkarm angeordnet sein. Um eine unabhängige Drehung von erstem und zweitem Schwenkarm zu ermöglichen, ist es weiterhin vorteilhaft, wenn zumindest ein Schwenkarm, beispielsweise der zweite Schwenkarm, schwenkbar mit dem Funktionsdreharm verbindbar ist.

Dabei ist es möglich, dass der erste und/oder der zweite Schwenkarm maschinell oder manuell verschwenkt werden können. Denkbar ist beispielsweise eine Unterstützung der Verschwenkbewegung mittels eines hydraulischen, elektrischen oder pneumatischen Antriebs, welcher von den Insassen des Nutzfahrzeugs bedient werden kann. Weiterhin ist denkbar, dass der erste und/oder der zweite Schwenkarm gegenüber der Bodenfläche beabstandet oder kontaktierend ausgebildet sind. Im letzteren Fall ist es vorteilhaft, wenn der erste und/oder der zweite Schwenkarm zur Bodenfläche kugel- oder rollengelagert ist. Denkbar ist auch, dass zumindest an der unteren Fläche des Schwenkarms eine Gleitschicht angeordnet ist, welche beispielsweise aus Polyoxymethylen (POM) besteht.

So kann beispielsweise die Position eines Beifahrersitzes mittels einer Drehung des zweiten Schwenkarms um die Längsachse bzw. um die Funktionsdrehsäule verändert werden, wenn der Beifahrersitz mit dem zweiten Schwenkarm mechanisch fest verbunden anordenbar ist.

Beispielsweise können der erste und/oder der zweite Schwenkarm mittels eines länglichen Hebels ausgebildet sein. Weiterhin können sie aus Kunststoff, einem faserverstärkten Kunststoff oder einem Metall wie zum Beispiel Aluminium oder Stahl oder einer Metalllegierung bestehen.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: einen Fahrer beim Beladen des Nutzfahrzeugs;
- Fig. 2: einen beim Beladen nutzbaren Gepäcktransportwagen;
- Fig. 3: die Bestückung des Gepäcktransportwagens mit zwei Aufbewahrungsbehältern;
- Fig. 4: die Verbindung des Gepäcktransportwagens mit den Aufbewahrungsbehältern;
- Fig. 5: eine Darstellung des Gepäcktransportwagens mit den verbundenen Aufbewahrungsbehältern in vertikal aufgestelltem Zustand;
- Fig. 6: den Gepäcktransportwagen gemäß Fig. 5 mit einem weiteren Aufbewahrungsbehälter;
- Fig. 7: die Verbindung des mit den Aufbewahrungsbehältern verbundenen Gepäcktransportwagens mit dem weiteren Aufbewahrungsbehälter;
- Fig. 8: eine Darstellung des Gepäcktransportwagens mit den drei verbundenen Aufbewahrungsbehältern;
- Fig. 9: den Transport des Gepäcktransportwagens mit den drei verbundenen Aufbewahrungsbehältern durch den Fahrer;
- Fig. 10: das Innere einer Fahrerkabine;
- Fig. 11: den ersten Schwenkarm mit stangenartigen Elementen im verschwenkten Zustand;
- Fig. 12: die Verschwenkung des zweiten stangenartigen Elements zum Schwenkarm und die Anordnung außerhalb der Fahrerkabine;
- Fig. 13: das Ausfahren des zweiten stangenartigen Elements und das Befestigen des weiteren Aufbewahrungsbehälters am zweiten stangenartigen Element;
- Fig. 14: das Anheben des weiteren Aufbewahrungsbehälters mittels einer Einfahrbewegung des zweiten stangenartigen Elements;
- Fig. 15: das zweite stangenartige Element im maximal eingefahrenen Zustand;
- Fig. 16: den ersten Schwenkarm und den am zweiten stangenartigen Element befestigten Aufbewahrungsbehälter in einem verschwenkten Zustand;
- Fig. 17-19: verschiedene Schritte der Beladung der Fahrerkabine mit den ersten beiden Aufbewahrungsbehältern;
- Fig. 20: die beladene Fahrerkabine mit geschlossener Beifahrertür;
- Fig. 21: das Innere der Fahrerkabine aus der Vogelperspektive;
- Fig. 22-25: verschiedene Positionen des Aufbewahrungsbehälters innerhalb der Fahrerkabine;
- Fig. 26-29: verschiedene Schritte der Anpassung des Kabineninneren bei einer Pause des Fahrers;
- Fig. 30, 31: Belegung der Kabine mit Fahrer und Beifahrer;
- Fig. 32-35: verschiedene Schritte der Anpassung des Kabineninneren durch den Beifahrer;
- Fig. 36-39: verschiedene Schritte der Anpassung des Beifahrersitzes;
- Fig. 40-42: verschiedene Schritte der Anpassung des Kabineninneren vor Weiterfahrt;
- Fig. 43a, 43b: Komponenten der Fahrerkabine in der Übersicht.

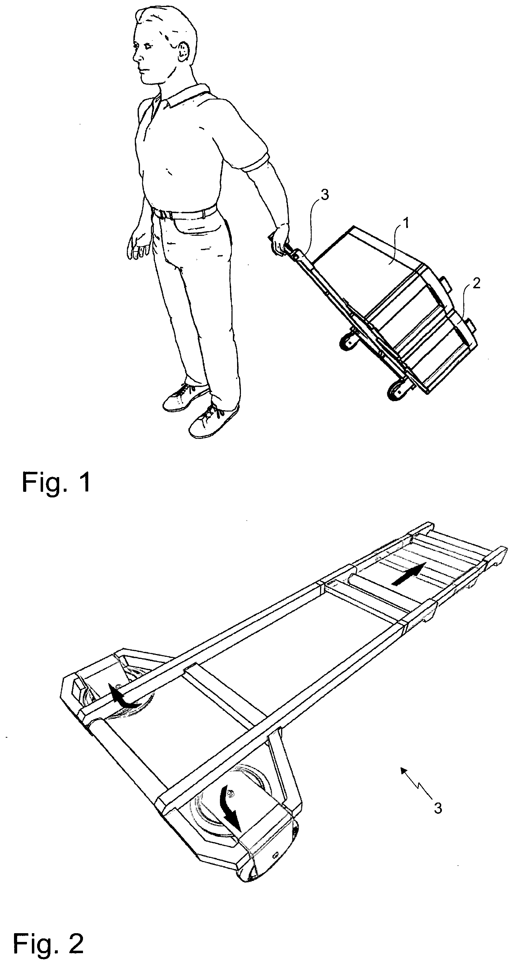

Es sei vorab erwähnt, dass die Figuren 1-9, 17-20, 37-41 und 43a Ausführungsbeispiele zeigen oder sich auf Ausführungsbeispiele konzentrieren, welche nicht zur Erfindung gehören, sondern lediglich einen Stand der Technik darstellen, welcher das Verständnis der Erfindung erleichtert.

Gemäß Fig. 1 ist vorgesehen, dass der Fahrer eine erste Boxeinheit 1 mit Arbeits- und Nahrungsmitteln und eine zweite Boxeinheit 2 mit persönlichen Utensilien, wie Kleider und Waschutensilien, auf einen gemeinsamen Gepäcktransportwagen 3 von beispielsweise einem Speditionsgebäude zu dem LKW transportiert. Der Gepäcktransportwagen 3 ist rollbar und ähnlich einem Trolley von Hand über eine Parkplatzfläche durch den LKW-Fahrer zu ziehen.

Der Gepäcktransportwagen 3 hat gemäß Fig. 2 einklappbare Räder, um ihn raumsparend in der LKW-Kabine oder außenseitig verstauen zu können. Zudem hat er einen ausziehbaren bzw. längenverstellbaren Griff.

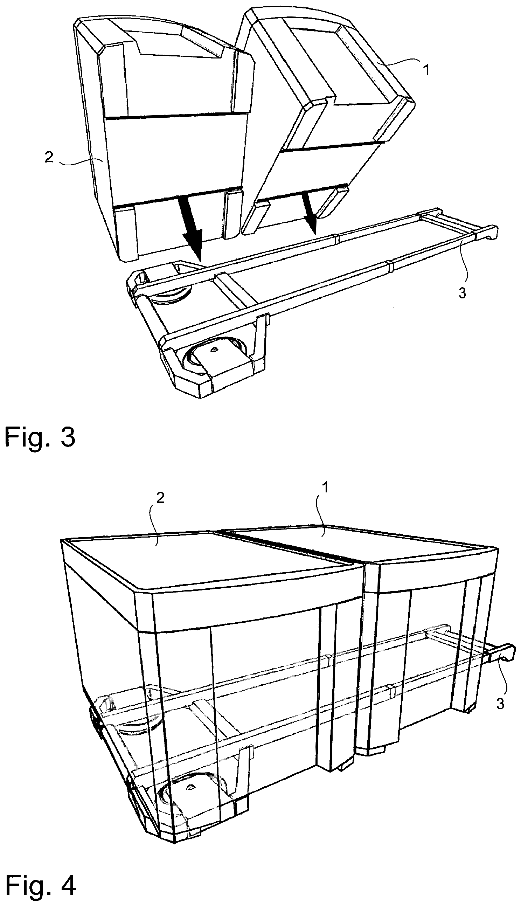

Der Gepäcktransportwagen 3 wird gemäß Fig. 3 mit den beiden Aufbewahrungsbehältern 1 und 2 bestückt und mit diesen mittels üblicher Verbindungen, z. B. mittels Klappverbindungen, verbunden. Eine derartige Verbindung ist in Fig. 4 dargestellt.

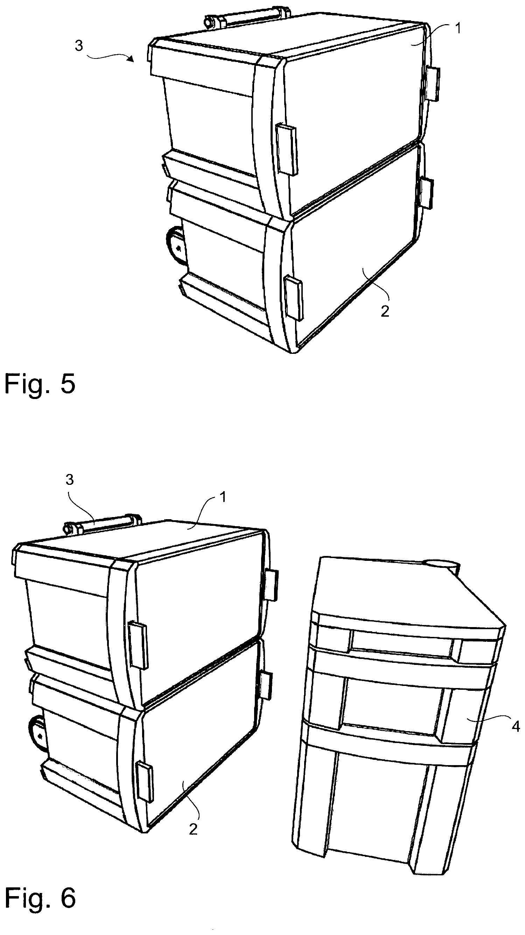

Anschließend wird der Gepäcktransportwagen 3 mit den Aufbewahrungsbehältern 1, 2 gemäß Fig. 5 aufgestellt, also in eine senkrechte Position gebracht.

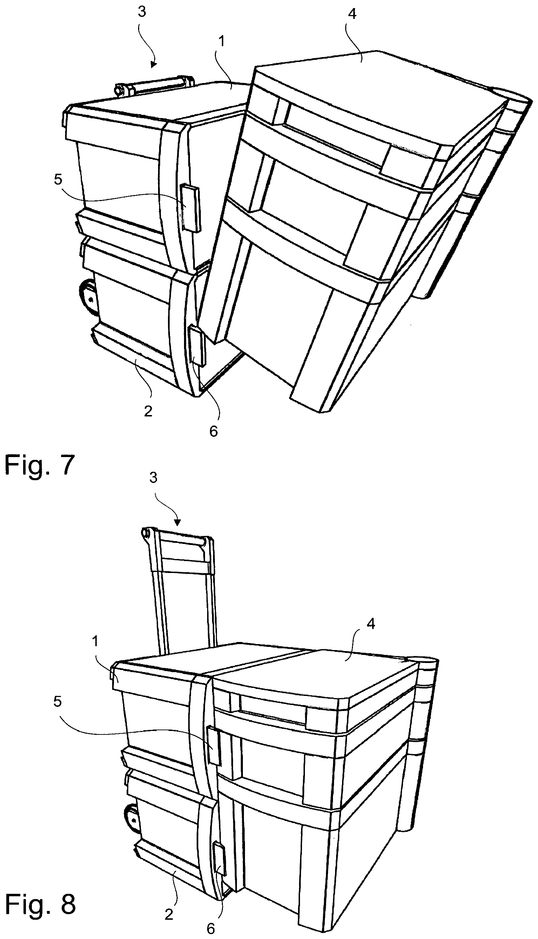

Die Aufbewahrungsbehälter 1, 2 können beispielsweise für persönliches Hab und Gut, wie Utensilien und Kleider verwendet werden. Ein weiterer Aufbewahrungsbehälter 4 gemäß Fig. 6 dient dann dazu, Arbeitsmaterialien wie Dokumente, Tablet-PCs, Kaffeemaschinen und gegebenenfalls weitere Nahrungsmittel mit in die Fahrerkabine 21 einzubringen und dort hin zu transportieren. Dieser weitere Aufbewahrungsbehälter 4 wird gemäß Fig. 7 durch beispielsweise Klappverbindungen 5, 6, die schwenkbar ausgebildet sind und aus Kunststoff bestehen, an den Aufbewahrungsbehältern 1 und 2 befestigt.

In Fig. 8 ist die feste Verbindung des Gepäcktransportwagens 3 zu den drei Aufbewahrungsbehältern 1, 2 und 4 dargestellt.

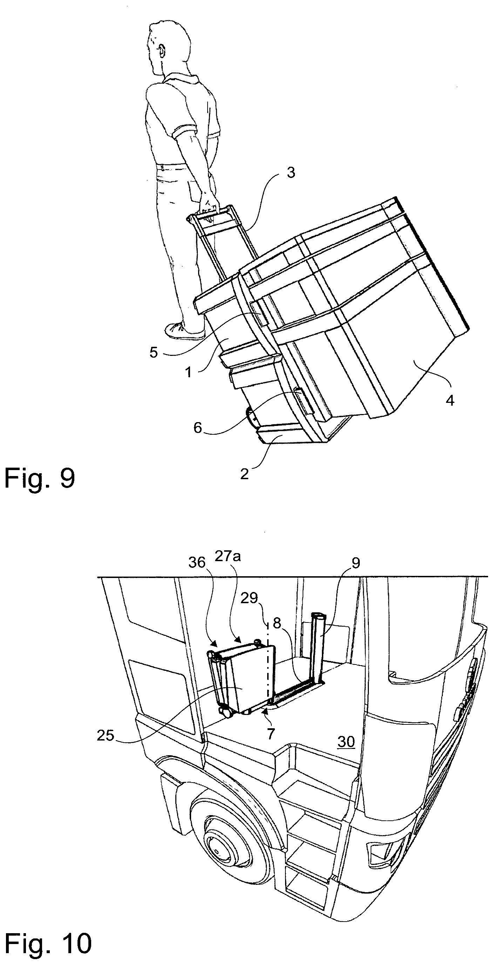

In Fig. 9 ist der Transport dieser drei Behälter 1, 2, 4 mittels des Transportwagens oder Gepäcktransportwagens 3 durch den Fahrer 40 wiedergegeben.

In Fig. 9 wird nun zusammen mit den fortfolgenden Figuren die erfindungsgemäße Beladung der Fahrerkabine 21 mit diesen drei Aufbewahrungsbehältern 1, 2 und 4 wiedergegeben. Zur einfacheren Darstellung ist die LKW-Kabine 21 hier nicht mit der Beifahrertür dargestellt. Es ist davon auszugehen, dass sich die Beifahrertür in einem offenen Zustand befindet.

In Fig. 10 ist deutlich zu entnehmen, dass ein zentraler Schwenkpunkt 7 innerhalb der Kabine an einer Bodenfläche 30 der Kabine angeordnet ist. An dem zentralen Schwenkpunkt 7 ist ein bodenseitig verlaufender Schwenkarm 8 schwenkbar angeordnet, der wiederum an seinem anderen Ende 2 im Wesentlichen vertikal verlaufende stangenartige Elemente 9 aufweist. Dieser zentrale Schwenkpunkt 7 markiert somit die Position einer ersten Drehachse 27a, welche eine erste Längsachse 29 aufweist und vorliegend mittels Wälzlagern (nicht gezeigt) und mittels eines Tragelements mit der Bodenfläche 30 schwenkbar verbunden ist. Überdeckt vom Beifahrersitz 25 wird eine Funktionsdrehsäule 36, welche vorliegend mechanisch starr mit der ersten Drehachse 27a verbunden ist.
Zwischen der Längsachse 29 und der Bodenfläche 30 ist vorliegend ein Winkel von 90° ausgebildet. Denkbar ist, dass die erste Drehachse 27a um ihre Längsachse 29 um 360° drehbar angeordnet und die Funktionsdrehsäule 36 als Hohlzylinder ausgebildet ist.

Hierbei ist die Funktionsdrehsäule 36 zwischen einem nicht gezeigten Fahrersitz 24 und einem Beifahrersitz 25 der Fahrerkabine 21 angeordnet.

An der Funktionsdrehsäule 36 ist ein erster Schwenkarm 8 mit einem ersten Endabschnitt 8a um die erste Längsachse 29 schwenkbar gelagert, wobei eine Längserstreckungsrichtung 8c des ersten Schwenkarms 8 senkrecht zur ersten Längsachse 29 angeordnet ist.

Weiterhin ist zu sehen, dass an einem zweiten Endabschnitt 8b des ersten Schwenkarms 8 stangenartige Elemente 9b, 9c zueinander parallel und senkrecht zum ersten Schwenkarm 8 angeordnet sind, wobei mindestens eines 9b, 9c der stangenartigen Elemente 9b, 9c um eine am zweiten Endabschnitt 8b des ersten Schwenkarms 8 angeordnete zweite Drehachse 27b verschwenkbar anordenbar sind, wobei die zweite Drehachse 27b parallel zu einer Längserstreckungsrichtung 9' der stangenartigen Elemente 9b, 9c angeordnet ist. Das erste stangenartige Element 9b ist vorliegend fluchtend zur zweiten Drehachse 27b anordenbar.

Darüber hinaus ist erkennbar, dass das zweite stangenartige Element 9c beabstandet zum ersten stangenartigen Element 9b und bezüglich der oberen Endabschnitte 9b1, 9c1 auf gleicher Höhe zu diesem angeordnet ist und mit diesem ersten stangenartigen Element 9b mittels eines Verbindungselements 31 verbunden ist. Das Verbindungselement 31 ist dabei jeweils an den ersten oberen Endabschnitten 9b1, 9c1 der stangenartigen Elemente 9b, 9c angeordnet.

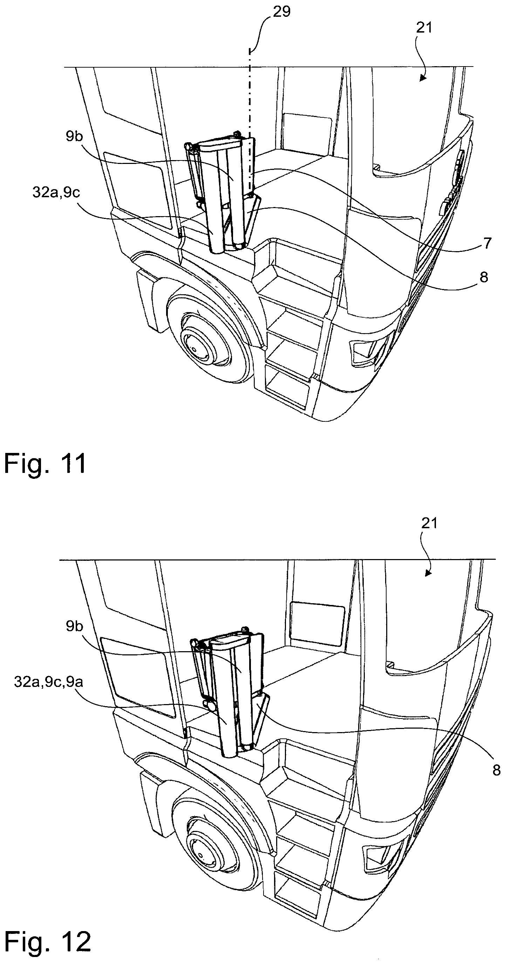

Gemäß Fig. 11 kann der erste Schwenkarm 8 um den Schwenkpunkt 7 bzw. um die Längsachse 29 innerhalb der Fahrerkabine 21 geschwenkt werden, so dass die beiden Säulen bzw. stangenartigen Elemente 9b, 9c über die Fahrerkabine 21 hinaus außenseitig an der Fahrerkabine 21 angeordnet sind. Dabei befindet sich das zweite stangenartige Element 9c, das als Teleskopelement 9a ausgebildet ist, in seinem Grundzustand 32a.

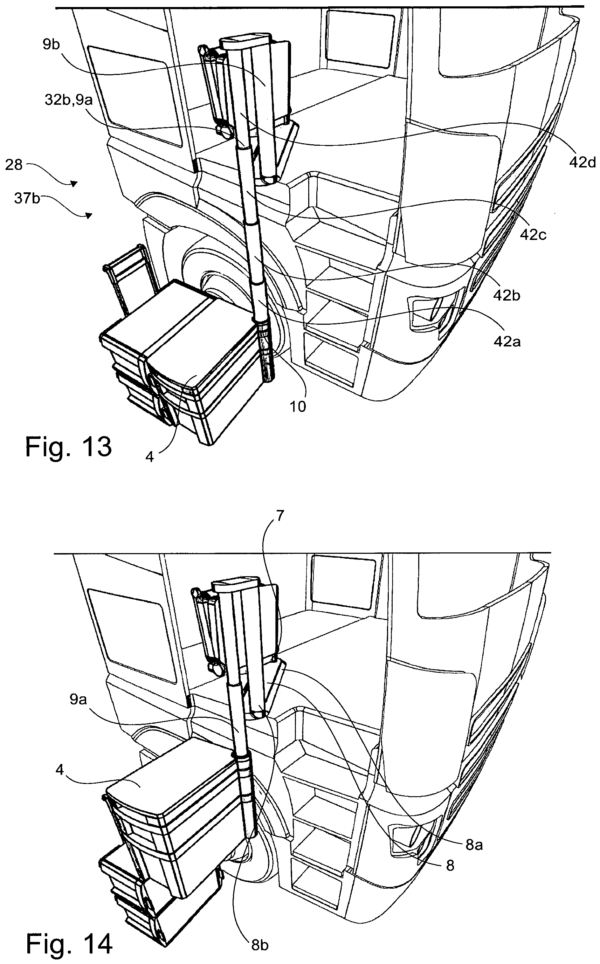

Anschließend findet - wie es in Fig. 12 und Fig. 13 dargestellt ist - ein Ausfahren einer der Säulen 9a statt, indem diese sich nach unten erstreckt bis zu einem hier maximal ausgefahrenen Zustand 32b und in eine dafür komplementär ausgebildete vorgesehene Eingreifeinrichtung 10 des Aufbewahrungsbehälters 4 eingreift. Dies kann beispielsweise mittels eines Klettverschlusses oder Formschlusses oder dergleichen stattfinden, um eine schnellstmögliche Verbindung zwischen dem Aufbewahrungsbehälter 4 und dem ausgefahrenen säulenartigen Element bzw. Teleskoparm 9a herzustellen. Dabei sind bevorzugt die Klappverbindungen 5, 6 gelöst.

Für diese Zwecke ist das zweite stangenartige Element 9c als Teleskoparm 9a ausgebildet, welcher aus insgesamt vier axial zueinander verschieblich gelagerten hohlzylindrischen Abschnitten 42a, 42b, 42c, 42d mit unterschiedlichen Außendurchmessern und Innendurchmessern besteht.

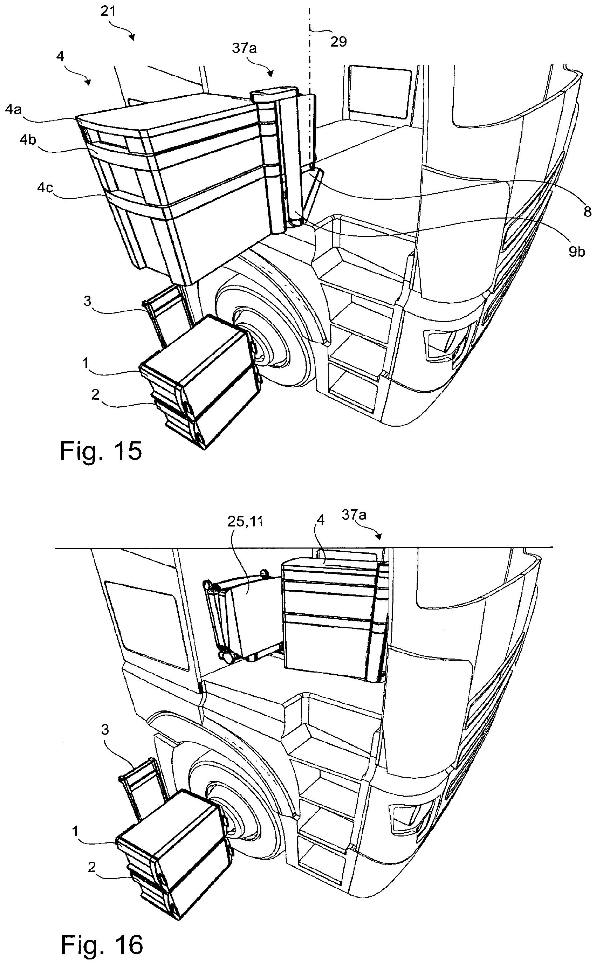

Gemäß Fig. 14, 15 und 16 findet anschließend ein Anheben des Aufbewahrungsbehälters 4 mittels einer Einfahrbewegung des Teleskoparms 9a statt und ein Hineinverschwenken um den Schwenkpunkt 7 bzw. die Längsachse 29 in die Fahrerkabine 21, wie es in Fig. 16 dargestellt ist. Anschließend kann der Aufbewahrungsbehälter 4 innerhalb der Fahrerkabine 21 an einem gewünschten Platz, der vorbestimmbar ist, abgestellt werden. Dies setzt voraus, dass der Beifahrersitz 25, wie er gemäß Bezugszeichen 11 im eingeklappten Zustand vorhanden ist, nicht momentan innerhalb des Transportweges für den Aufbewahrungsbehälter 4 angeordnet ist.

Somit findet erfindungsgemäß eine Schwenkung des aufgegriffenen Aufbewahrungsbehälters 4 um den Schwenkpunkt 7 bzw. die Längsachse 29 innerhalb der Fahrzeugkabine 21 statt. Ebenso erfindungsgemäß ist der Beifahrersitz 25 in diesem Zustand eingeklappt und liegt somit als Klappsitz 11 vor. Somit ist der eingeklappte Beifahrersitz 11, der ebenso erfindungsgemäß ausgebildet ist, nicht im Wege stehend bezüglich des Transportweges des Aufbewahrungsbehälters 4.

Die Schwenkeinrichtung, umfassend die erste Drehachse 27a, deren Längsachse 29 sowie den Schwenkarm 8 sowie den nachfolgend noch beschriebenen Schwenkarm 28, die angeordnet ist, um innerhalb der Fahrerkabine den Aufbewahrungsbehälter 4 und gegebenenfalls weitere Elemente, wie beispielsweise den eingeklappten Beifahrersitz 11 oder weitere Aufbewahrungselemente, die später noch gezeigt werden, zu verschwenken, ist als ein wesentlicher Punkt der Erfindung zu sehen.

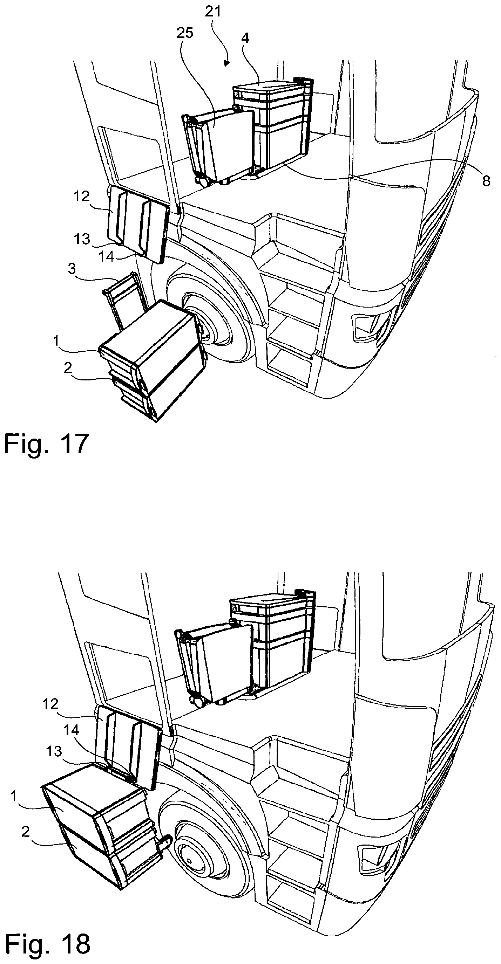

In Fig. 17, 18 und 19 wird der anschließende Transport der Aufbewahrungsbehälter 1 und 2 und somit die Beladung der Fahrerkabine 21 mit den Aufbewahrungsbehältern 1 und 2 dargestellt. Es ist zu sehen, dass diese Aufbewahrungsbehälter 1, 2 über die ohnehin in den bisherigen Fahrerkabinen 21 enthaltene seitliche Ladungsluke 12 mittels Einhängen in dafür vorgesehene Hakenelemente 13 und 14 an der Klappe dieser Öffnung 12 nach oben geschwenkt werden können und in den Fahrerkabinenraum gebracht werden können.

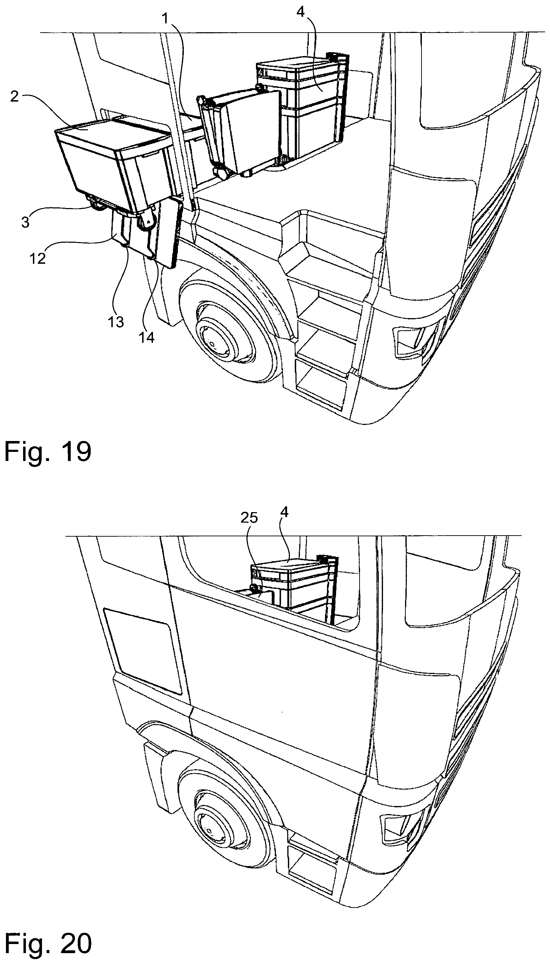

Gemäß Fig. 20 ist die Fahrerkabine mit geschlossener Beifahrertür und den eingebrachten Aufbewahrungsbehältern dargestellt.

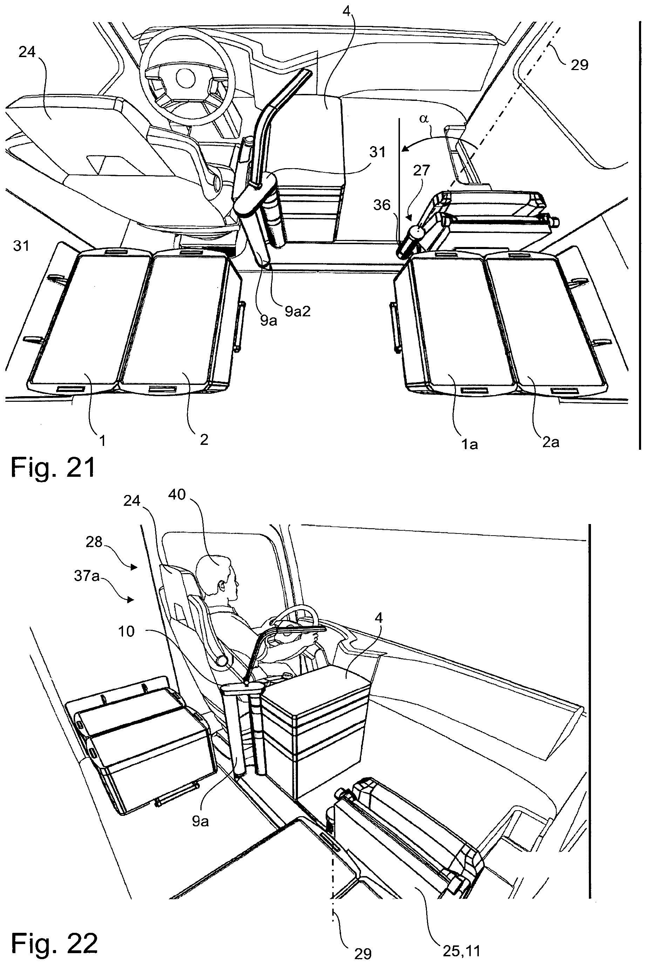

Fig. 21 zeigt nochmals den Fahrerkabineninnenraum nach Beladung mit den Aufbewahrungsbehältern 1, 2, 4. Dieser Darstellung ist deutlich zu entnehmen, dass der weitere Aufbewahrungsbehälter 4 zwischen dem Beifahrersitz 25 und dem Fahrersitz 24 angeordnet ist. Dabei kann ein mit dem oberen Endabschnitt 9a1 temporär verbindbares und manuell bedienbares Schwenkstangenelement 43 für die Erleichterung der Verschwenkung des Aufbewahrungsbehälters 4 sorgen. Die Aufbewahrungsbehälter 1, 2 für persönliches Hab und Gut können ebenso insgesamt vier Aufbewahrungsbehälter 1, 2, 1a und 2a darstellen und innerhalb der Fahrerkabine 21 im rückwärtigen Bereich angeordnet sein. Dies ist in Fig. 21 dargestellt.

Ferner ist zu sehen, dass der Aufbewahrungsbehälter 4 nach wie vor an dem Teleskoparm 9a mechanisch fest verbunden angeordnet ist.

Denkbar wäre auch, dass im Gegensatz zur gezeigten Anordnung, gemäß der das Verbindungselement 31 nach wie vor zwischen dem Teleskoparm 9a und dem anderen stangenartigen Element 9b angeordnet ist, das andere stangenartige Element 9b und das Verbindungselement 31 nach Beladung der Fahrerkabine 21 entfernt werden sowie der Teleskoparm 9a mit dem zweiten Ende 8b des ersten Schwenkarms 8 verbunden wird. Dabei ist es denkbar, dass die für die Versorgung der Komponenten wichtigen Leitungen mittels Schnellkupplung oder Verbindungselementen am unteren Endabschnitt 9a2 des Teleskoparms 9a mit den vorhandenen Anschlüssen am zweiten Ende 8b des ersten Schwenkarms 8 verbunden werden.

Denkbar wäre auch, dass der Aufbewahrungsbehälter 4 nun am ersten stangenartigen Element 9b befestigt wäre, wodurch der Teleskoparm 9a und das Verbindungselement 31 entfernt werden könnten.

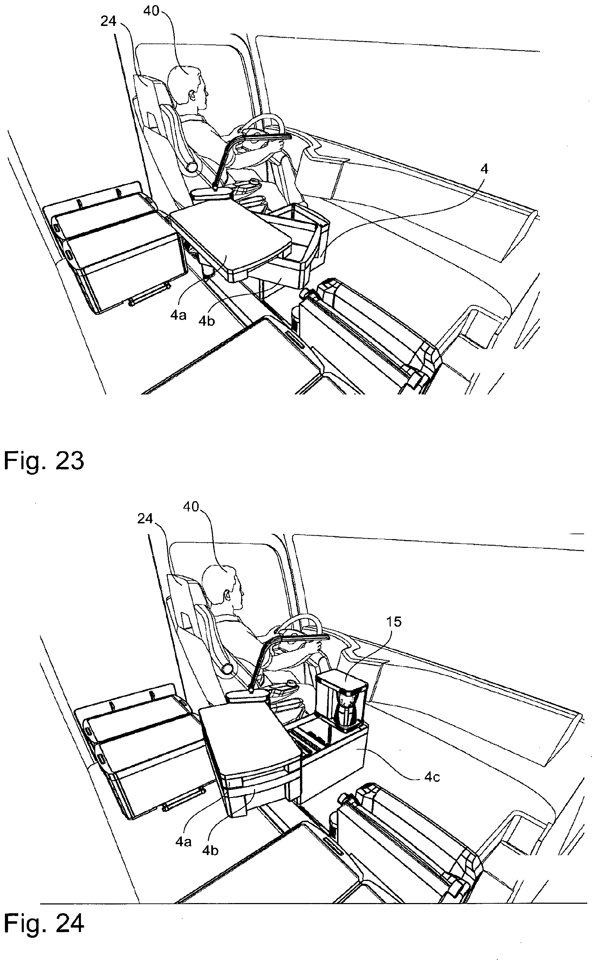

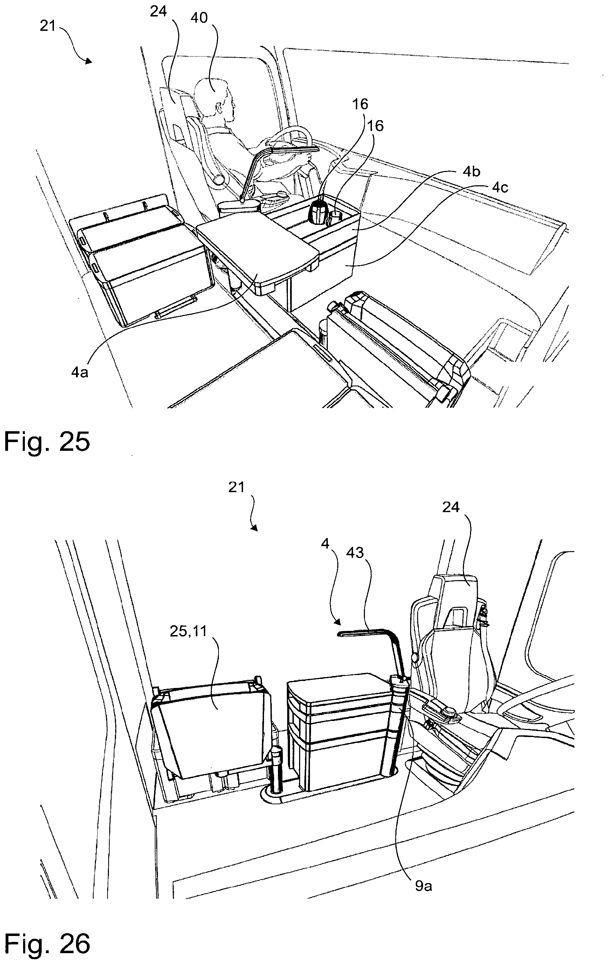

In Fig. 22, 23, 24 und 25 ist der Aufbewahrungsbehälter 4, der mittig zwischen Fahrersitz 24 und Beifahrersitz 25 angeordnet ist, in verschiedenen Positionen dargestellt. Vorteilhaft weist der Aufbewahrungsbehälter 4 einen derartigen Schwenkmechanismus innerhalb des Behälters 4 auf, dass er - wenn er oberseitig mittels der Befestigung 10 an dem Teleskoparm 9a angeordnet ist - in verschiedenen Niveaus unterschiedlich weit um den Teleskoparm 9a aufgeschwenkt werden kann. Dies ist beispielsweise in Fig. 23, 24 und 25 dargestellt. Der obere Abschnitt 4a kann dabei beispielsweise als Arbeitsfläche beispielsweise zum Essen und Arbeiten dienen. Dazu könnte optional der obere Abschnitt 4a beispielsweise mit einem Tablet versehen sein. Ein darunterliegender Abschnitt 4b beinhaltet bestimmte aufzubewahrende Dokumente. Ein darunterliegender Abschnitt 4c gemäß Fig. 24 beinhaltet weitere Aufbewahrungsteile, wie beispielsweise eine Kaffeemaschine 15, wie in Fig. 24 gezeigt. Ebenso kann ein Cup-Holder mit einer Kaffeekanne 16 in dem Aufbewahrungsbehälter 4 angeordnet sein. Dies ist in Fig. 25 dargestellt. Der Aufbewahrungsbehälter kann auch optional eine aktive Kühlbox für Kaltgetränke enthalten.

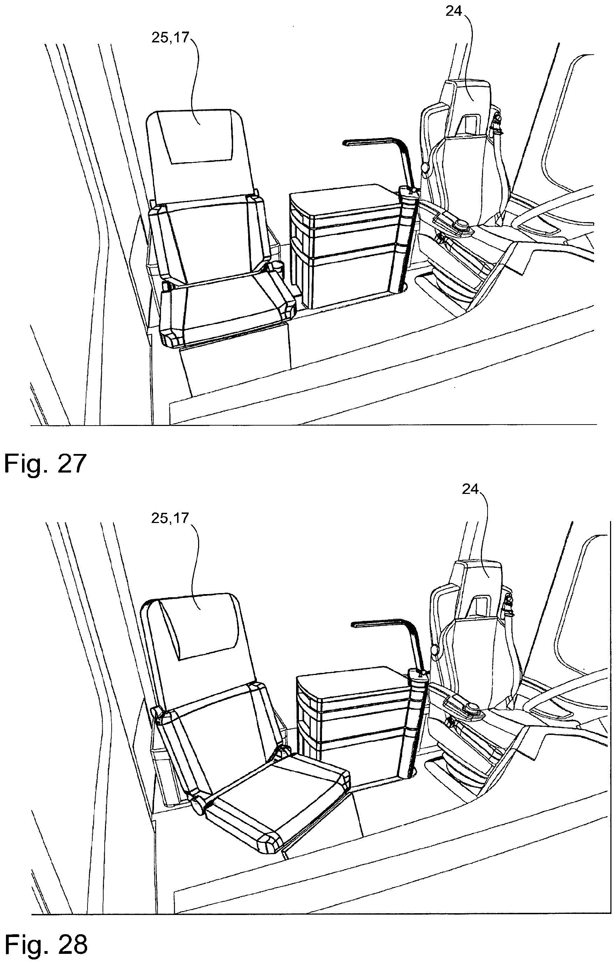

Wenn der Fahrer 40 eine Pause machen möchte, begibt er sich - wie aus den Figuren 26, 27, 28 und 29 ersichtlich - auf den ebenso schwenkbaren Beifahrersitz 25 in eine Kaffeepausenposition, indem er zu dem oberen Abschnitt 4a des Aufbewahrungsbehälters 4, der sich in ausgeschwenkter Stellung befindet, hinschwenkt. D.h. dass der Beifahrersitz 25 um den bereits bekannten Schwenkpunkt 7 bzw. um die Längsachse 29 und der dazugehörigen Schwenkeinrichtung derart geschwenkt wird, dass er zu dem Tisch 4a hingewandt ist.

Denkbar ist auch, dass der an der Funktionsdrehsäule 36 angeordnete zweite Schwenkarm 28 mit einem ersten Endabschnitt 28a um die erste Längsachse 29 ebenfalls schwenkbar gelagert ist, wobei eine Längserstreckungsrichtung 28c des zweiten Schwenkarms 28 senkrecht zur ersten Längsachse 29 angeordnet ist, und dass der Beifahrersitz 25 mit dem zweiten Schwenkarm 28 mechanisch fest verbunden anordenbar ist.

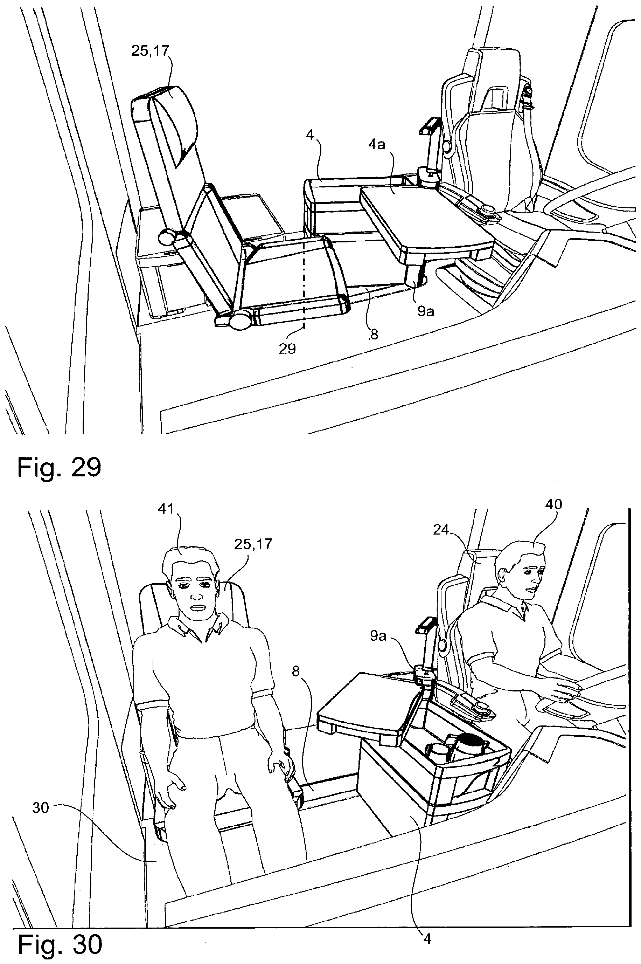

Zugleich kann der Tisch 4a um den Teleskoparm 9a herumgeschwenkt werden und dadurch von dem restlichen Aufbewahrungsbehälter 4 weggeschwenkt werden. Dies ist beispielsweise in Fig. 29 wiedergegeben. Die erfindungsgemäße Schwenkeinrichtung im Schwenkpunkt 7 beinhaltet somit nicht nur eine ortsfeste, stationäre Anordnung einer Schwenkachse, sondern auch verschiedene Schwenkarme, wie beispielsweise den Schwenkarm 8, an dem wiederum weitere Bauteile, wie der Aufbewahrungsbehälter 4, angeordnet sein können. Ebenso kann der Beifahrersitz 17 mittels eines weiteren Schwenkarms 28 an der Schwenkeinrichtung mit dem Schwenkpunkt 7 schwenkbar angeordnet sein.

Der teleskopartige Arm 9a kann vorteilhaft Strom- oder Wasserleitungen, Hydraulik- und Pneumatikleitungen beinhalten, um entsprechend beispielsweise Wasseranschluss, Stromanschluss innerhalb des Aufbewahrungsbehälters 4 beispielsweise für die Kaffeemaschine 15 zu haben. Ebenso dient die Pneumatik/Elektrik/Hydraulik für das Auf- und Abwärtsfahren des Teleskoparms 9a.

Somit müssen diese Arten von Leitungen über den Schwenkarm 8 in den Drehpunkt 7 hinein führen und dort unterseitig unterhalb des Fahrzeugkabinenbodens 30 oder in diesen integriert zu jeweiligen Vorratsbehältern führen. Selbstverständlich sind hierfür Pumpen und ähnliche Einrichtungen entsprechend angeordnet.

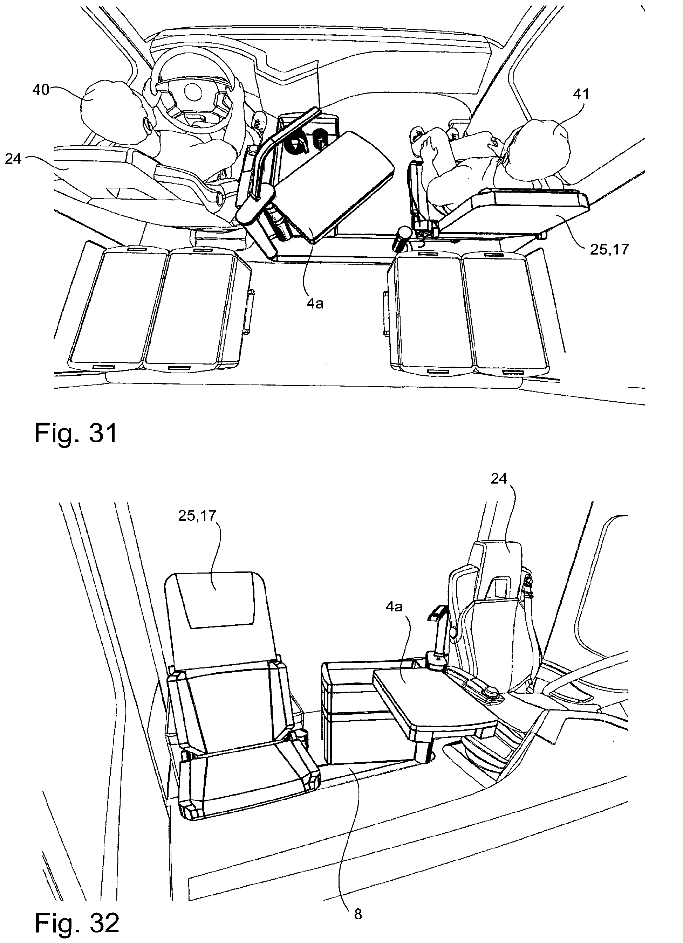

In Fig. 30 und 31 ist nochmals die Belegung beider Sitze 24, 25, also auch des Beifahrersitzes 25, mit verschwenktem Oberteil des Aufbewahrungsbehälters 4, welches als Tisch ausgebildet sein kann, dargestellt.

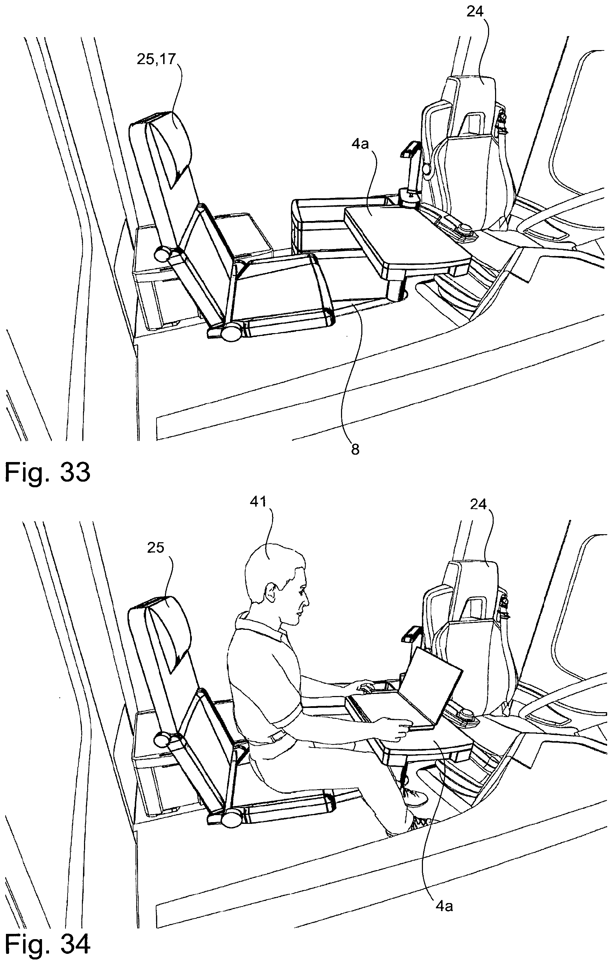

In den Figuren 32-35 ist die Benutzung des Tablets durch den Beifahrer 41 wiedergegeben. Hierfür wird der Beifahrersitz 25 mittels der Schwenkeinrichtung in Richtung des Tisches 4a des Aufbewahrungsbehälters 4 geschwenkt und auf das sich auf dem Tisch 4a befindenden Tablet von dem Beifahrer 41, gegebenenfalls auch während der Fahrt, bedient.

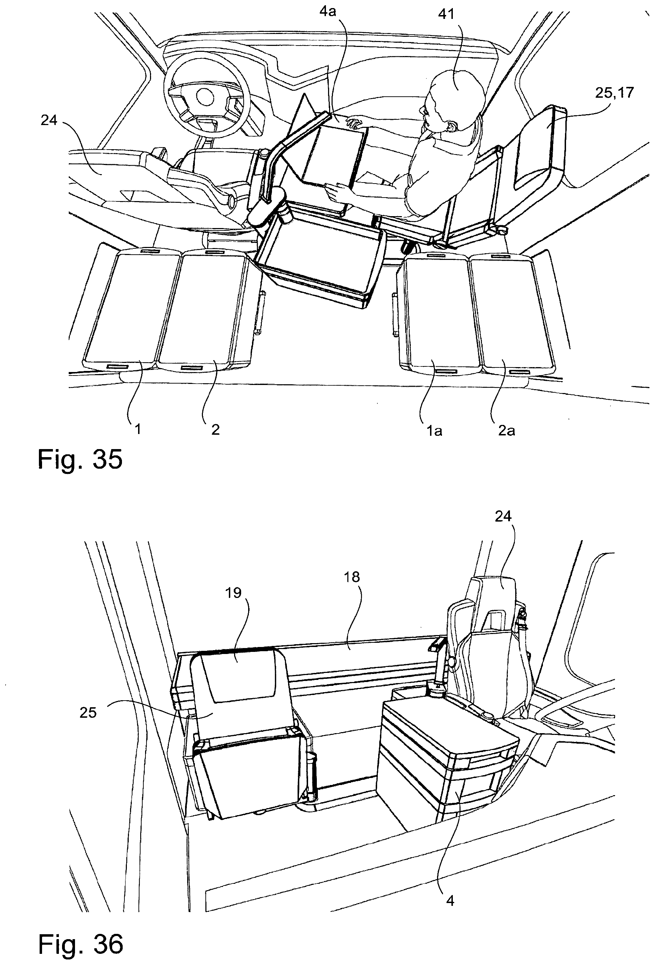

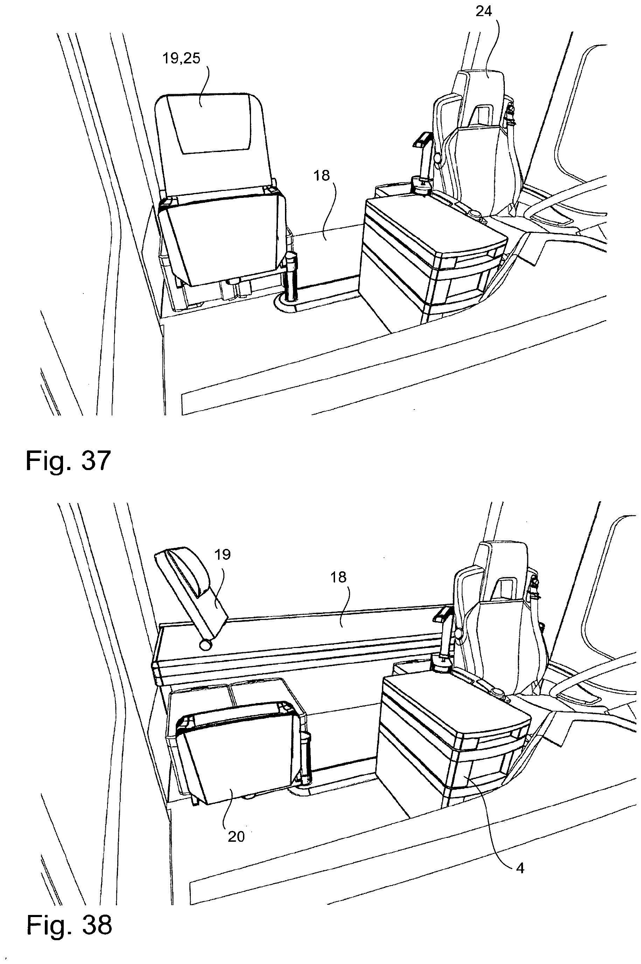

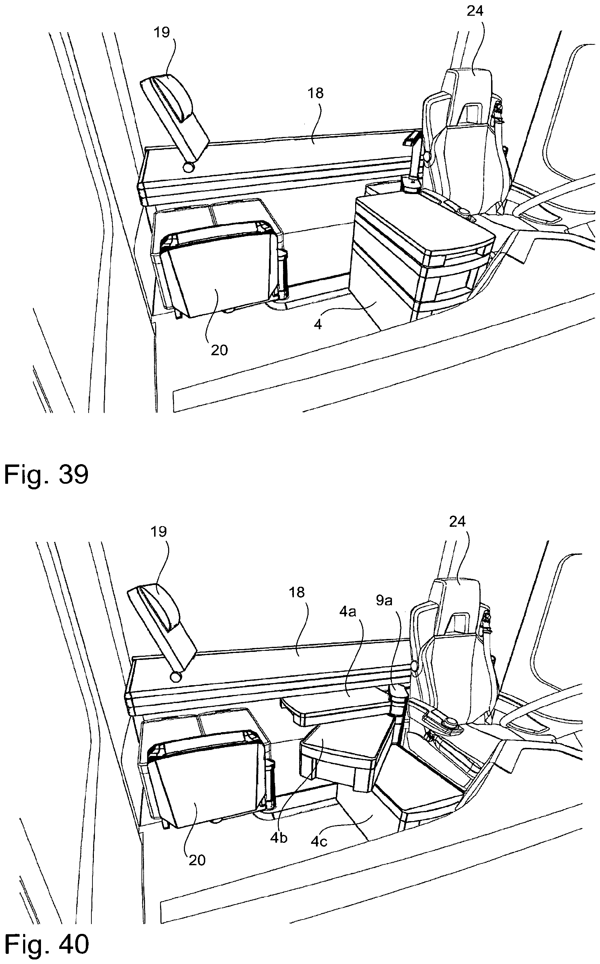

In den Figuren 36-39 ist dargestellt, wie der Beifahrersitz 25 entsprechend verändert werden kann, um dem Fahrer 40 oder dem Beifahrer 41 eine liegende Ruheposition im hinteren Teil der Fahrerkabine 21 zu ermöglichen. Gemäß Fig. 36 und 37 ist der Beifahrersitz 25 im zusammengeklappten Zustand gezeigt. In Fig. 38 ist erkennbar, dass das Oberteil 25a des zusammengeklappten Beifahrersitzes 25 erfindungsgemäß abgenommen werden kann und auf die Liegefläche 18 im hinteren Bereich der Fahrerkabine 21 abgestellt werden kann. Das Oberteil 19 des Beifahrersitzes 25, welches einen Teil der Rückenlehne darstellt, dient somit als Lehne für den Fahrer 40 oder Beifahrer 41, wie es in Fig. 39 im liegenden Zustand wiedergegeben ist. Zugleich wird der untere und somit restliche Teil 20 des Beifahrersitzes 25 im eingeklappten Zustand 11 unterhalb der Liegefläche 18 angeordnet. Dies ist in Fig. 38 dargestellt.

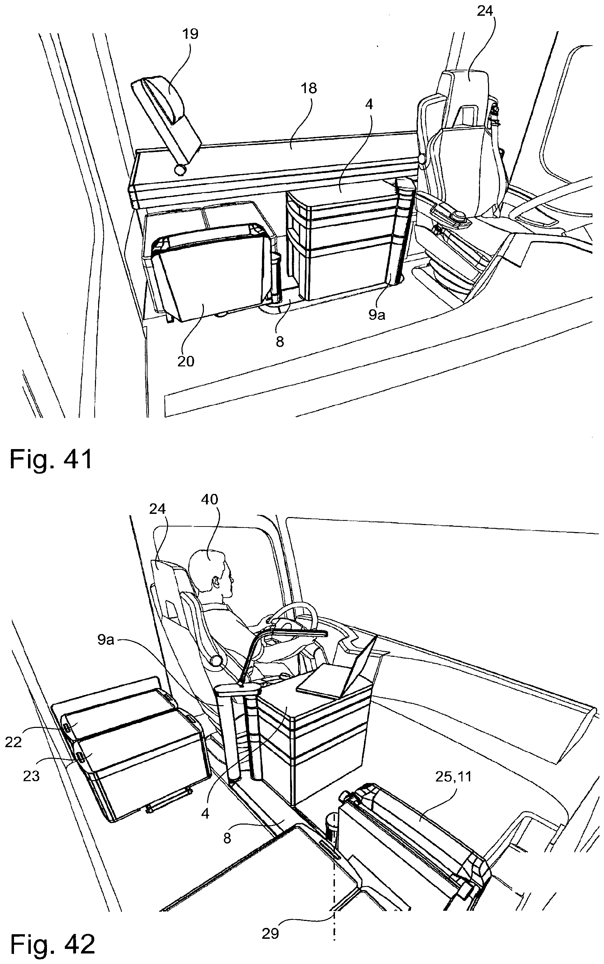

In Fig. 40, 41 und 42 wird nochmals die Abfahrt am nächsten Tag nach erfolgter Ruhepause dargestellt. Hierfür ist erfindungsgemäß der Teleskoparm 9a, der säulenartig ausgebildet ist, mit den einzelnen Teilen 4a, 4b und 4c des Aufbewahrungsbehälters 4 derart schwenkbar angeordnet, dass diese Teile 4a, 4b und 4c in ihrer dargestellten Form treppenartig angeordnet werden können. Hierdurch kann sich der auf der Liegefläche 18 befindende Mensch 40, 41 über die Treppe nach unten bewegen in den Fahrerkabinenraum. Anschließend kann gemäß Fig. 41 diese treppenartige Anordnung vollständig mittels des Schwenkmechanismus und der säulenartigen Anordnung 9a unterhalb der Liegefläche 18 angeordnet sein, um in dem vorderen Bereich ausreichend Platz, zum Beispiel zu Anziehen mit Kleidern zu haben. Im Anschluss daran befindet sich dann der Fahrer 40 wieder auf seinem Fahrersitz 24 und der Aufbewahrungsbehälter 4 wird mittels der Schwenksäule 9 wieder nach vorne verschwenkt, um so neben dem Fahrersitz 24 angeordnet zu sein. Somit kann wieder eine Bedienung des Tablets und von ähnlichen Instrumenten, gegebenenfalls der Kaffeemaschine 15, stattfinden. Zugleich kann die rückseitig angeordnete Liegefläche 18 im eingeklappten Zustand, wie es beispielsweise in den Boxen 22 und 23 dargestellt ist, angeordnet sein, um im rückwärtigen Bereich mehr Raum zur Verfügung zu haben.

Insgesamt ist das System durch seinen Schwenkmechanismus, die dadurch bedingte leichte Beladung mit entsprechenden Beladungshilfen und dem innovativen klappbaren Beifahrersitz sowie den Aufbewahrungsbehältern gekennzeichnet. Die in Leichtbauweise ausgebildeten einzelnen Elemente ermöglichen das Nutzen des Innenraumes einer Fahrerkabine in vielfältiger Weise durch die erfindungsgemäße Schwenkeinrichtung, die verschiedenen Schwenkarme, den klappbaren Beifahrersitz und durch die innovativen einzelnen Bauteile, wie Aufbewahrungsbehälter, kann der Innenraum immer wieder neu und vorteilhaft sowie raumsparend gestaltet werden.

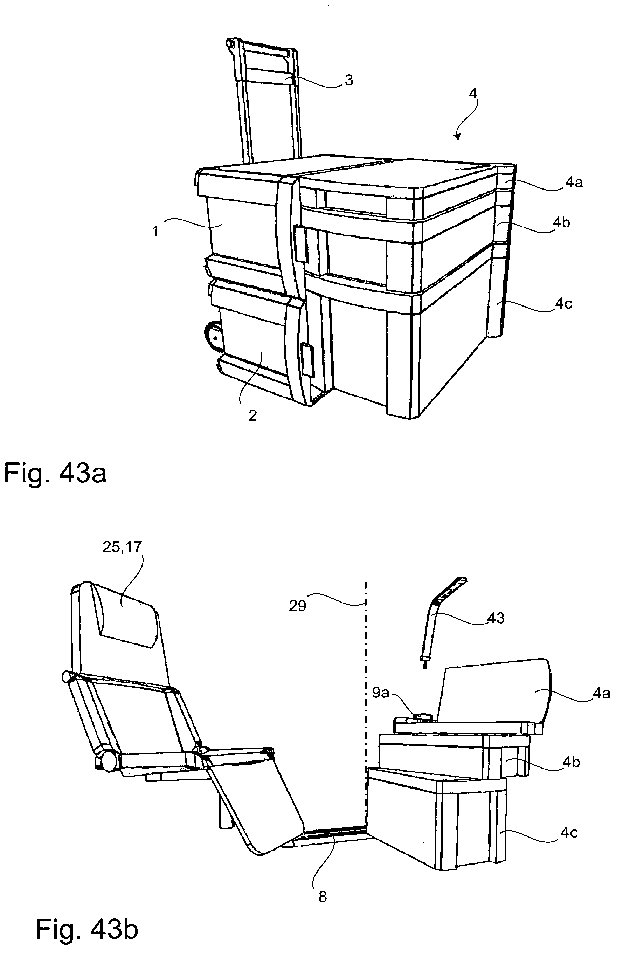

Die einzelnen Bauteile sind nochmals in Fig. 43a und 43b separat dargestellt.

### Bezugszeichenliste

- 1, 1a, 2, 2a, 4: Aufbewahrungsbehälter
- 3: Gepäcktransportwagen
- 4a, 4b, 4c: Abschnitte
- 5, 6: Klappverbindungen
- 7: Schwenkpunkt
- 8, 28: Schwenkarme
- 8a, 8b: Endabschnitte
- 8c: Längserstreckungsrichtung
- 9b, 9c: stangenartige Elemente
- 9a1, 9b1, 9c1, 36a: oberer Endabschnitt
- 9a2, 9b2: unterer Endabschnitt
- 9a: Teleskoparm
- 9': Längserstreckungsrichtung
- 10: Eingreifeinrichtung
- 11: Beifahrersitz, eingeklappt
- 12: Ladungsluke
- 13, 14: Hakenelemente
- 15: Kaffeemaschine
- 16: Cupholder
- 17: Beifahrersitz, ausgeklappt
- 18: Liegefläche
- 19: Oberteil
- 20: restlicher Teil
- 21: Fahrerkabine
- 22, 23: Box
- 24: Fahrersitz
- 25: Beifahrersitz
- 25a: Oberteil
- 25b: Rückenlehne
- 25c: Sitzteil
- 25d: Fußteil
- 26: Schwenkeinrichtung
- 27a, 27b: Drehachse
- 29: Längsachse
- 30: Bodenfläche
- 31: Verbindungselement
- 32a: Grundzustand
- 32b: ausgefahrener Zustand
- 33a: Ausfahrbewegung
- 33b: Einfahrbewegung
- 34: Leitungen
- 35a, 35b, 35c: Achsen
- 36: Funktionsdrehsäule
- 37a: Grundzustand
- 37b: ausgefahrener Zustand
- 38: Teleskopvorrichtung
- 39: Deckenfläche
- 40: Fahrer
- 41: Beifahrer
- 42a, b, c, d: hohlzylindrische Abschnitte
- 43: Schwenkstangenelement

## Patentansprüche

1. Fahrerkabine (21) eines Nutzfahrzeugs,
wobei sich innerhalb der Fahrerkabine (21) eine an einer Bodenfläche (30) der Fahrerkabine (21) angeordnete erste Drehachse (27a) mit einer Funktionsdrehsäule (36) erstreckt und zwischen einer ersten Längsachse (29) der ersten Drehachse (27a) und der Ausrichtung der Bodenfläche (30) ein Winkel (α) ausgebildet ist,
**dadurch gekennzeichnet, dass**
die erste Drehachse (27a) eine Welle ausbildet, welche gegenüber der Bodenfläche (30) mit mindestens zwei oberhalb und/oder unterhalb der Bodenfläche (30) in mindestens einem Tragelement angeordneten Wälzlagern drehbar gelagert ist, wobei das mindestens eine Tragelement mechanisch starr mit der Bodenfläche (30) verbunden ist, oder dass die erste Drehachse (27a) mittels einer Flanschverbindung mechanisch starr mit der Bodenfläche (30) verbunden ist und die Funktionsdrehsäule (36) mittels Wälzlagern gegenüber der ersten Drehachse (27a) gelagert ist,
wobei die Funktionsdrehsäule (36) als Zylinder oder Hohlzylinder ausgebildet und fluchtend mit der ersten Drehachse (27a) angeordnet ist.

2. Fahrerkabine (21) nach Anspruch 1,
**dadurch gekennzeichnet, dass**
der Winkel (α) einen Wert aus einem Bereich von 45° bis 90°, bevorzugt von 90°, aufweist.

3. Fahrerkabine (21) nach einem der vorhergehenden Ansprüche,
**dadurch gekennzeichnet, dass**
die Funktionsdrehsäule (36) als Zylinder oder als Hohlzylinder ausgebildet ist.

4. Fahrerkabine (21) nach einem der vorhergehenden Ansprüche,
**dadurch gekennzeichnet, dass**
die Funktionsdrehsäule (36) zwischen einem Fahrersitz (24) und einem Beifahrersitz (25) der Fahrerkabine (21) angeordnet ist.

5. Fahrerkabine (21) nach einem der vorhergehenden Ansprüche,
**dadurch gekennzeichnet, dass**
die Funktionsdrehsäule (36) eine Teleskopvorrichtung (28) zum stufenlosen teleskopartigen Ausfahren der Funktionsdrehsäule (36) entlang der ersten Längsachse (29) von einem Grundzustand (37a) bis zu einem ausgefahrenen Zustand (37b) aufweist, wobei eine Länge der Funktionsdrehsäule (36) im ausgefahrenen Zustand (37b) einen Wert aufweist, der maximal einem Abstand zwischen der Bodenfläche (30) der Fahrerkabine (21) bis zu einer gegenüberliegenden Deckenfläche (39) der Fahrerkabine (21) entspricht und/oder wobei ein oberer Endabschnitt (36a) der Funktionsdrehsäule (36) an der Deckenfläche (39) befestigbar ist.

6. Fahrerkabine (21) nach einem der vorhergehenden Ansprüche,
**dadurch gekennzeichnet, dass**
die Funktionsdrehsäule (36) mindestens ein Anzeigeelement zum Anzeigen von Informationen für einen Fahrer (40) und/oder Beifahrer (41) aufweist.

7. Fahrerkabine (21) nach einem der vorhergehenden Ansprüche,
**dadurch gekennzeichnet, dass**
an der Funktionsdrehsäule (36) ein erster Schwenkarm (8) mit einem ersten Endabschnitt (8a) um die erste Längsachse (29) schwenkbar gelagert ist, wobei eine Längserstreckungsrichtung (8c) des ersten Schwenkarms (8) senkrecht zur ersten Längsachse (29) angeordnet ist.

8. Fahrerkabine (21) nach Anspruch 7,
**dadurch gekennzeichnet, dass**
an einem zweiten Endabschnitt (8b) des ersten Schwenkarms (8) stangenartige Elemente (9b, 9c) zueinander parallel und senkrecht zum ersten Schwenkarm (8) angeordnet sind, wobei mindestens eines (9b, 9c) der stangenartigen Elemente (9b, 9c) um eine am zweiten Endabschnitt (8b) des ersten Schwenkarms (8) angeordnete zweite Drehachse (27b) verschwenkbar anordenbar sind, wobei die zweite Drehachse (27b) parallel zu einer Längserstreckungsrichtung (9') der stangenartigen Elemente (9b, 9c) angeordnet ist.

9. Fahrerkabine (21) nach Anspruch 8,
**dadurch gekennzeichnet, dass**
ein Aufbewahrungsbehälter (4) mit einem ersten (9b) und/oder einem zweiten (9c) der stangenartigen Elemente (9b, 9c) mechanisch fest verbunden anordenbar ist.

10. Fahrerkabine (21) nach einem der Ansprüche 8 oder 9,
**dadurch gekennzeichnet, dass**
das erste stangenartige Element (9b) und/oder das zweite stangenartige Element (9c) fluchtend zur zweiten Drehachse (27b) anordenbar ist.

11. Fahrerkabine (21) nach einem der Ansprüche 8-10,
**dadurch gekennzeichnet, dass**
das zweite stangenartige Element (9c) beabstandet zum ersten stangenartigen Element (9b) angeordnet ist und mit diesem mittels eines Verbindungselements (31) verbindbar ist, wobei das Verbindungselement (31) jeweils an einem ersten oberen Endabschnitt (9b1, 9c1) der stangenartigen Elemente (9b, 9c) anordenbar ist.

12. Fahrerkabine (21) nach einem der vorhergehenden Ansprüche,
**dadurch gekennzeichnet, dass**
an der Funktionsdrehsäule (36) ein zweiter Schwenkarm (28) mit einem ersten Endabschnitt (28a) um die erste Längsachse (29) schwenkbar gelagert ist, wobei eine Längserstreckungsrichtung (28c) des zweiten Schwenkarms (28) senkrecht zur ersten Längsachse (29) angeordnet ist.

13. Fahrerkabine (21) nach Anspruch 12,
**dadurch gekennzeichnet, dass**
ein Beifahrersitz (25) mit dem zweiten Schwenkarm (28) mechanisch fest verbunden anordenbar ist.

## Claims

1. Driver's cab (21) of a commercial vehicle,
a first rotary shaft (27a), which has a functional rotary column (36) and is arranged on a floor surface (30) of the driver's cab (21), extending within the driver's cab (21), and an angle (α) being formed between a first longitudinal axis (29) of the first rotary shaft (27a) and the orientation of the floor surface (30),
**characterised in that**
the first rotary shaft (27a) forms a shaft which is mounted so as to be able to rotate relative to the floor surface (30) by means of at least two roller bearings arranged above and/or below the floor surface (30) in at least one support element, the at least one support element being mechanically rigidly connected to the floor surface (30), or **in that** the first rotary shaft (27a) is mechanically rigidly connected to the floor surface (30) by means of a flange connection and the functional rotary column (36) is mounted with respect to the first rotary shaft (27a) by means of roller bearings,
the functional rotary column (36) being formed as a cylinder or hollow cylinder and being arranged so as to be aligned with the first rotary shaft (27a).

2. Driver's cab (21) according to claim 1,
**characterised in that**
the angle (α) has a value from a range of 45° to 90°, preferably 90°.

3. Driver's cab (21) according to any of the preceding claims,
**characterised in that**
the functional rotary column (36) is formed as a cylinder or as a hollow cylinder.

4. Driver's cab (21) according to any of the preceding claims, **characterised in that**
the functional rotary column (36) is arranged between a driver's seat (24) and a passenger seat (25) of the driver's cab (21).

5. Driver's cab (21) according to any of the preceding claims, **characterised in that**
the functional rotary column (36) has a telescopic device (28) for continuously extending the functional rotary column (36) in a telescopic manner along the first longitudinal axis (29) from a default state (37a) to an extended state (37b), a length of the functional rotary column (36) in the extended state (37b) having a value which corresponds at most to a distance between the floor surface (30) of the driver's cab (21) and an opposite ceiling surface (39) of the driver's cab (21), and/or it being possible to fasten an upper end portion (36a) of the functional rotary column (36) to the ceiling surface (39).

6. Driver's cab (21) according to any of the preceding claims, **characterised in that**
the functional rotary column (36) has at least one display element for displaying information to a driver (40) and/or passenger (41).

7. Driver's cab (21) according to any of the preceding claims,
**characterised in that**
a first pivot arm (8) is mounted on the functional rotary column (36) by a first end portion (8a) so as to be able to pivot about the first longitudinal axis (29), a longitudinal extension direction (8c) of the first pivot arm (8) being perpendicular to the first longitudinal axis (29).

8. Driver's cab (21) according to claim 7,
**characterised in that**
at a second end portion (8b) of the first pivot arm (8), rod-like elements (9b, 9c) are arranged in parallel with one another and perpendicularly to the first pivot arm (8), it being possible for at least one (9b, 9c) of the rod-like elements (9b, 9c) to be arranged so as to be able to pivot about a second rotary shaft (27b) arranged at the second end portion (8b) of the first pivot arm (8), the second rotary shaft (27b) being arranged in parallel with a longitudinal extension direction (9') of the rod-like elements (9b, 9c).

9. Driver's cab (21) according to claim 8,
**characterised in that**
a storage container (4) can be arranged so as to be mechanically rigidly connected to a first (9b) and/or a second (9c) of the rod-like elements (9b, 9c).

10. Driver's cab (21) according to either claim 8 or claim 9,
**characterised in that**
the first rod-like element (9b) and/or the second rod-like element (9c) can be arranged so as to be aligned with the second rotary shaft (27b).

11. Driver's cab (21) according to any of claims 8-10,
**characterised in that**
the second rod-like element (9c) is spaced apart from the first rod-like element (9b) and can be connected thereto by means of a connecting element (31), it being possible to arrange the connecting element (31) at a first upper end portion (9b1, 9c1) of each of the rod-like elements (9b, 9c).

12. Driver's cab (21) according to any of the preceding claims,
**characterised in that**
a second pivot arm (28) is mounted on the functional rotary column (36) by a first end portion (28a) so as to be able to pivot about the first longitudinal axis (29), a longitudinal extension direction (28c) of the second pivot arm (28) being perpendicular to the first longitudinal axis (29).

13. Driver's cab (21) according to claim 12,
**characterised in that**
a passenger seat (25) can be arranged so as to be mechanically rigidly connected to the second pivot arm (28).

## Revendications

1. Cabine de conduite (21) d'un véhicule utilitaire,
dans laquelle un premier axe de rotation (27a) disposé sur une surface du plancher (30) de la cabine de conduite (21), avec une colonne rotative fonctionnelle (36), s'étend à l'intérieur de la cabine de conduite (21) et un angle (α) est formé entre un premier axe longitudinal (29) du premier axe de rotation (27a) et l'orientation de la surface du plancher (30),
**caractérisée par le fait que**
le premier axe de rotation (27a) forme un arbre, lequel est monté rotatif par rapport à la surface de plancher (30) avec au moins deux paliers à roulement disposés au-dessus et/ou au-dessous de la surface du plancher (30) dans au moins un élément support, ledit au moins un élément support étant relié de façon mécaniquement rigide avec la surface de plancher (30), ou **par le fait que** le premier axe de rotation (27a) est relié de façon mécaniquement rigide avec la surface de plancher (30) au moyen d'un raccord à bride et la colonne rotative fonctionnelle (36) est montée par rapport au premier axe de rotation (27a) au moyen de paliers à roulement,
la colonne rotative fonctionnelle (36) étant formée en tant que cylindre ou cylindre creux et étant disposée dans l'alignement du premier axe de rotation (27a).

2. Cabine de conduite (21) selon la revendication 1,
**caractérisée par le fait que**
l'angle (α) présente une valeur se situant dans la plage de 45° à 90°, de préférence de 90°.

3. Cabine de conduite (21) selon l'une des revendications précédentes,
**caractérisée par le fait que**
la colonne rotative fonctionnelle (36) est formée en tant que cylindre ou en tant que cylindre creux.

4. Cabine de conduite (21) selon l'une des revendications précédentes,
**caractérisée par le fait que**
la colonne rotative fonctionnelle (36) est disposée entre un siège de conduite (24) et un siège de passager (25) de la cabine de conduite (21).

5. Cabine de conduite (21) selon l'une des revendications précédentes,
**caractérisée par le fait que**
la colonne rotative fonctionnelle (36) présente un dispositif télescopique (28) pour le déploiement télescopique à variation continue de la colonne rotative fonctionnelle (36) le long du premier axe longitudinal (29) d'un état de base (37a) jusqu'à un état déployé (37b), une longueur de la colonne rotative fonctionnelle (36) à l'état déployé (37b) présentant une valeur qui correspond au maximum à une distance entre la surface de plancher (30) de la cabine de conduite (21) jusqu'à une surface de plafond opposée (39) de la cabine de conduite (21) et/ou une section d'extrémité supérieure (36a) de la colonne rotative fonctionnelle (36) étant apte à être fixée à la surface de plafond (39).

6. Cabine de conduite (21) selon l'une des revendications précédentes,
**caractérisée par le fait que**
la colonne rotative fonctionnelle (36) présente au moins un élément d'affichage pour l'affichage d'informations pour un conducteur (20) et/ou un passager (41).

7. Cabine de conduite (21) selon l'une des revendications précédentes,
**caractérisée par le fait que**
sur la colonne rotative fonctionnelle (36), un premier bras de pivotement (8) est monté apte à pivoter par une première section d'extrémité (8a) autour du premier axe longitudinal (29), une direction d'extension longitudinale (8c) du premier bras de pivotement (8) étant disposée perpendiculairement au premier axe longitudinal (29).

8. Cabine de conduite (21) selon la revendication 7,
**caractérisée par le fait que**
sur une seconde section d'extrémité (8b) du premier bras de pivotement (8), des éléments en forme de barre (9b, 9c) sont disposés parallèlement entre eux et perpendiculairement au premier bras de pivotement (8), au moins l'un (9b, 9c) des éléments en forme de barre (9b, 9c) étant apte à être disposé apte à pivoter autour d'un second axe de rotation (27b) disposé sur la seconde section d'extrémité (8b) du premier bras de pivotement (8), le second axe de rotation (27b) étant disposé parallèlement à une direction d'extension longitudinale (9') des éléments en forme de barre (9b, 9c).

9. Cabine de conduite (21) selon la revendication 8,
**caractérisée par le fait que**
un réservoir de stockage (4) est apte à être disposé mécaniquement solidaire d'avec un premier (9b) et/ou un second (9c) des éléments en forme de barre (9b, 9c).

10. Cabine de conduite (21) selon l'une des revendications 8 ou 9,
**caractérisée par le fait que**
le premier élément en forme de barre (9b) et/ou le second élément en forme de barre (9c) sont aptes à être disposés dans l'alignement du second axe de rotation (27b).

11. Cabine de conduite (21) selon l'une des revendications 8 à 10,
**caractérisée par le fait que**
le second élément en forme de barre (9c) est disposé espacé par rapport au premier élément en forme de barre (9b) et est apte à être relié à celui-ci au moyen d'un élément de liaison (21), l'élément de liaison (31) étant apte à être disposé respectivement sur une première section d'extrémité supérieure (9b1, 9c1) des éléments en forme de barre (9b, 9c).

12. Cabine de conduite (21) selon l'une des revendications précédentes,
**caractérisée par le fait que**
sur la colonne rotative fonctionnelle (36), un second bras de pivotement (28) est monté apte à pivoter par une première section d'extrémité (28a) autour du premier axe longitudinal (29), une direction d'extension longitudinale (28c) du second bras de pivotement (28) étant disposée perpendiculairement au premier axe longitudinal (29).

13. Cabine de conduite (21) selon la revendication 12,
**caractérisée par le fait que**
un siège de passager (25) est apte à être disposé mécaniquement solidaire d'avec le second bras de pivotement (28).
